(19) **Europäisches Patentamt / European Patent Office / Office européen des brevets**

(11) **EP 3 614 856 B1**

(12) **FASCICULE DE BREVET EUROPEEN**

(45) Date de publication et mention de la délivrance du brevet:
**15.07.2026 Bulletin 2026/29**

(21) Numéro de dépôt: **18726524.4**

(22) Date de dépôt: **27.04.2018**

(51) Classification Internationale des Brevets (IPC):
**A23J 1/14** (2006.01)   **A23J 3/14** (2006.01)
**A23L 33/185** (2016.01)   **A23L 29/10** (2016.01)

(52) Classification Coopérative des Brevets (CPC):
**A23J 3/14; A23J 1/14; A23L 29/10; A23L 33/185**

(86) Numéro de dépôt international:
**PCT/FR2018/051076**

(87) Numéro de publication internationale:
**WO 2018/197822 (01.11.2018 Gazette 2018/44)**

(54) **ALBUMINES DE POIS AMELIOREES, PROCEDE D'OBTENTION ET LEURS APPLICATIONS**

VERBESSERTE ERBSENALBUMINE, VERFAHREN ZUR HERSTELLUNG DAVON UND ANWENDUNGEN DAVON

IMPROVED PEA ALBUMINS, METHOD FOR OBTAINING SAME AND APPLICATIONS THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2017 FR 1753765**

(43) Date de publication de la demande:
**04.03.2020 Bulletin 2020/10**

(73) Titulaire: **Roquette Frères**
**62136 Lestrem (FR)**

(72) Inventeurs:
• **SENECOT, Ludovic**
**62820 Libercourt (FR)**
• **LECOCQ, Aline**
**59420 Mouvaux (FR)**
• **BARATA, Manuel**
**62620 Maisnil Les Ruitz (FR)**

(74) Mandataire: **Roquette IP International**
**Roquette Frères**
**1, rue de la Haute Loge**
**62136 Lestrem (FR)**

(56) Documents cités:
**FR-A1- 2 701 847    FR-A1- 2 889 416**
**FR-A1- 3 001 362**

• **QUILLIEN L ET AL: "Foaming and emulsifying properties of pea albumin fractions and partial characterisation of surface-active components", JOURNAL OF THE SCIENCE OF FOOD AND AGRICULTURE, WILEY & SONS, CHICHESTER, GB, vol. 80, no. 13, 1 October 2000 (2000-10-01), pages 1964 - 1972, XP002682065, ISSN: 0022-5142, DOI: 10.1002/1097-0010(200010) 80:13<1964::AID-JSFA737>3.0.CO;2-J**
• **LEI (LEIGH) GAO ET AL: "Pilot Scale Recovery of Proteins from a Pea Whey Discharge by Ultrafiltration", LWT - FOOD SCIENCE AND TECHNOLOGY, vol. 34, no. 3, 1 May 2001 (2001-05-01), pages 149 - 158, XP055076942, ISSN: 0023-6438, DOI: 10.1006/fstl.2000.0743**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 3 614 856 B1**

## Description

La présente invention est relative à une albumine de pois caractérisée en ce que son activité émulsifiante est améliorée car elle peut émulsionner plus de 600 ml d'huile de maïs par gramme d'albumine. Elle traite également d'un procédé permettant l'obtention de ladite albumine de pois selon l'invention. Elle traite enfin de l'utilisation de la dite albumine de pois selon l'invention dans des applications industrielles, notamment alimentaires, cosmétiques et pharmaceutiques.

Depuis les années 70, le pois est la légumineuse à graines qui s'est le plus développée en Europe et majoritairement en France, notamment comme ressource protéique pour l'alimentation animale mais aussi humaine. Le pois contient environ 27 % en poids de matières protéiques. Le terme « pois » est ici considéré dans son acception la plus large et inclut en particulier toutes les variétés sauvages de « pois lisse » (« smooth pea »), et toutes les variétés mutantes de « pois lisse » et de « pois ridé » (« wrinkled pea »), et ce quelles que soient les utilisations auxquelles on destine généralement lesdites variétés : alimentation humaine, nutrition animale et/ou autres utilisations.

Parmi les constituants du pois, les plus valorisés actuellement sont l'amidon, les fibres et les protéines, encore désignés sous l'expression de constituants nobles. Le procédé de valorisation correspondant consiste à réaliser initialement une suspension de farine, par mélange dans un pétrin entre la farine de pois et de l'eau. Après avoir extrait l'amidon et les fibres de ce mélange par centrifugation, on dispose d'une fraction riche en protéines ou fraction légère. A partir de cette fraction, les isolats sont obtenus par précipitation sélective des protéines à leur pH isoélectrique ; l'objectif étant d'insolubiliser une protéine d'intérêt riche en globulines. On effectue alors une opération de séparation sur cette suspension de farine, ou « lait », notamment par thermo coagulation, dont l'objectif est d'insolubiliser une protéine d'intérêt constituée de globulines. A ce stade du procédé, il est nécessaire de réaliser une séparation notamment par décantation centrifuge, de manière à isoler la composition très riche en globulines encore appelée « floc ». Le surnageant constitue ce que l'homme du métier désigne généralement sous l'expression de « fractions solubles ».

Il convient tout d'abord de préciser que le terme « fractions solubles » constitue un abus de langage en ce sens que ladite fraction contient un certain nombre de particules insolubles, comme des colloïdes divers et variés mais aussi et surtout des protéines. Ces fractions solubles doivent tout d'abord être concentrées par évaporation, de manière à ce qu'on puisse récupérer les composés insolubles, et notamment les protéines, qu'elles contiennent. A ce jour, les fractions solubles sont très peu exploitées ; elles sont utilisées de manière quasi exclusive comme source d'azote en fermentation et en tant qu'aliment nutritif pour le bétail une fois lesdites fractions enrichies en fibres.

Or, force est de constater que le rendement du procédé global conduisant du pois initial à la composition riche en globulines, le floc, est loin d'atteindre les 100 %. On estime qu'à un échelon industriel, on retrouve au sein des fractions solubles entre 5 % et 25 %, mais plus généralement autour de 20 % en poids des protéines initialement contenues dans le pois de départ.

Plusieurs travaux ont été réalisés afin de récupérer cette fraction protéique, majoritairement de type albumine, présente dans cette fraction soluble. Le document « Pilot scale recovery of proteins from a pea whey discharge by ultrafiltration » (Lei (Leigh) Gao, Lebensm.-Wiss. u.-Technol., vol 34, pp. 149-158, 2001) s'intéresse à la récupération d'albumines de pois par centrifugation suivie d'ultrafiltration, puis d'une neutralisation à pH 7 et d'une atomisation.

La Demande de Brevet WO 2006 / 052003 concerne quant à elle un procédé de préparation de polypeptides solubles issus d'un effluent liquide de transformation de pois, par filtration membranaire, puis neutralisation par ajout de carbonate de calcium et séchage.

La Demanderesse a également mis au point un procédé décrit dans la demande de brevet WO2014118449 reposant sur la succession a) d'une centrifugation ou d'une microfiltration, b) puis d'une ultrafiltration, c) et enfin éventuellement d'une osmose inverse afin de récupérer une fraction riche en albumine.

Les propriétés émulsifiantes sont classiquement évaluées par deux indices : l'activité émulsifiante (EA) et la stabilité de l'émulsion (ES). (Boye & al. 2010a). L'activité émulsifiante (EA) se définit par la quantité maximale d'huile pouvant être dispersée dans une solution aqueuse contenant une quantité définie d'émulsifiant avant rupture ou inversion de phase de l'émulsion (Sherman, 1995).

Les albumines laitières sont connues pour leur activité émulsifiante importante. Malgré les progrès réalisés jusqu'à aujourd'hui, l'activité émulsifiante des albumines de pois sont intéressantes mais restent en deçà de celles des fractions albuminiques laitières, qui demeurent la référence.

« Pilot scale recovery of proteins from a pea whey discharge by ultrafiltration » (Lei (Leigh) Gao, Lebensm.-Wiss. u.-Technol., vol 34, pp. 149-158, 2001) nous enseigne dans sa table 3 que l'activité émulsifiante, ou capacité émulsifiante, de l'albumine de pois est nettement en deçà de celle du soja ou de celle du lait : l'activité émulsifiante y est inférieure de moitié par rapport à celle de l'albumine d'œuf. On note également dans cet article que la capacité moussante, c'est-à-dire la propension du produit à former de la mousse, est quant à elle excellente, cette propriété qui peut être intéressante pour certaines applications va à l'encontre des propriétés recherchées dans le cadre de la présente invention. En effet, la formation de mousse peut poser problème lorsque ces composés doivent être soumis à une étape de filtration sur membrane, un ajout d'antimousse chimique devant alors être opéré. En raison de cette activité émulsifiante plus faible, les albumines de pois ne peuvent pas complétement remplacer les protéines laitières, et en particulier les albumines laitières, dans plusieurs applications alimentaires comme la charcuterie ou les coffee-whiteners voire certaines applications pharmaceutiques ou cosmétiques. Plusieurs approches afin d'améliorer cette activité émulsifiante ont été proposées. « Foaming and emulsifying properties of pea albumin fractions and partial characterisation of surface-active components » (Lu & al., J.Sci.Food.Agric., 80 :1964-1972, 2000) nous enseigne que les propriétés émulsifiantes de l'albumine de pois sont maximales à pH acide et qu'il faudrait mettre en œuvre un procédé complexe de fractionnement afin d'accéder à une sous-fraction baptisée Pa2 pour améliorer les propriétés émulsifiantes des albumines de pois. D'autres stratégies complexes et couteuses impliquent par exemple une hydrolyse enzymatique ou bien des modifications chimiques. Ces approches restent néanmoins compliquées et couteuses.

Il est du mérite de la Demanderesse d'avoir su isoler une albumine de pois ayant une activité émulsifiante améliorée, d'avoir conçu un procédé simple pour l'obtenir et d'avoir développé des applications alimentaires cosmétiques, et pharmaceutiques avec ladite albumine de pois améliorée jusqu'ici impossible à mettre en œuvre avec les précédentes albumines végétales connues.

Un premier objet de la présente invention consiste donc en une albumine de pois caractérisée en ce que son activité émulsifiante est supérieure à 600 ml d'huile de maïs par gramme d'albumine. De manière préférentielle, l'activité émulsifiante sera supérieure à 800ml d'huile de maïs par gramme d'albumine. De manière plus préférentielle, l'activité émulsifiante sera supérieure à 1000ml d'huile de maïs par gramme d'albumine.

Par albumine de pois, on entend dans la présente demande la fraction protéique soluble dans l'eau extraite lors du procédé de fractionnement aqueux des différents constituants du pois (voir pour exemple le brevet EP1400537 de la demanderesse).

L'activité émulsifiante est définie comme la quantité maximale d'huile pouvant être dispersée dans une solution aqueuse contenant une quantité définie d'émulsifiant avant rupture ou inversion de phase de l'émulsion (Sherman, 1995). Afin de la quantifier, la Demanderesse a développé un test permettant de la quantifier aisément, rapidement et de manière reproductible. Ce procédé consiste à mettre en œuvre les étapes suivantes :

1. 0,2g de l'échantillon du produit est dispersée dans 20ml d'eau
2. La solution est homogénéisée avec un appareil Ultraturax IKA T25 pendant 30 sec à une vitesse de 9500 tours par minute (rpm).
3. Ajout de 20ml d'huile de maïs commercialisée sous la dénomination AMPHORA par la Société CARGILL sous homogénéisation dans les mêmes conditions que l'étape 2 précédente.
4. Centrifugation pendant 5 minutes à 3100g

   a. Si on obtient une bonne émulsion, c'est-à-dire sans rupture ou inversion de phase de l'émulsion , on recommence le test à l'étape 1 en augmentant les quantités d'eau et d'huile de maïs de 50%.
   b. Si on obtient une mauvaise émulsion, par exemple un déphasage, une rupture ou inversion de phase de l'émulsion, on recommence le test à l'étape 1 en diminuant les quantités d'eau et d'huile de maïs de 50%.

La quantité maximale d'huile (Qmax en ml) pouvant être émulsifiée est ainsi déterminée de manière itérative.

L'activité émulsifiante est donc la quantité maximale d'huile de maïs pouvant être émulsifiée par grammes de produit.

$$\text{Activité émulsifiante} = (Qmax / 0,2)*100$$

Un second objet de la présente invention consiste en un procédé de traitement d'une fraction soluble de pois permettant l'obtention d'une albumine de pois comprenant :

a. La fourniture d'une fraction soluble de pois
b. Suivie d'une étape de dégazage sous vide de la fraction soluble de pois
c. Suivie d'une étape de microfiltration ou de centrifugation de la fraction soluble dégazée conduisant à un perméat de microfiltration ou à un surnageant de centrifugation,
d. Suivie d'une étape d'ultrafiltration du perméat de microfiltration ou du surnageant de centrifugation précédents, conduisant à un retentât d'ultrafiltration,
e. Suivie d'une étape éventuelle d'osmose inverse du perméat d'ultrafiltration conduisant à un perméat et à un retentât issus de l'osmose inverse.
f. Suivie d'une neutralisation du pH des retentâts obtenus lors des étapes d) ou e)
g. Suivie d'un traitement thermique de type UHT du retentât neutralisé de l'étape f)
h. Suivie d'un séchage du retentât traité thermiquement de l'étape g).

La première étape consiste donc en la fourniture d'une fraction soluble de pois. Par fraction soluble de pois, on entend la solution résiduelle obtenue après extraction de l'amidon, des fibres internes et des globulines à partir d'un lait aqueux de farine de pois (voir pour exemple le brevet EP1400537 de la demanderesse).

La seconde étape consiste donc en une étape de dégazage sous vide. Le but est ici de débarrasser la fraction soluble de pois de ses gaz dissous par un traitement sous vide. Un appareil adapté peut-être par exemple le skid SPX DEROX. La fraction soluble est soumise à une température d'entrée qui est par exemple comprise entre 45°c et 55°C, préférentiellement autour de 50°C, et à des conditions de basse pression. Le « vide » appliqué correspond par exemple à une pression comprise entre 0,05 bar et 0,15 bar ; préférentiellement autour de 0,1 bar. Cette étape permet de s'affranchir de l'ajout d'antimousse traditionnellement effectué qui dégrade les propriétés fonctionnelles de l'albumine.

La troisième étape du procédé selon l'invention est une étape de microfiltration ou de centrifugation qui a lieu directement sur les fractions solubles de pois dégazées, telles qu'issues de l'étape précédente. Cette étape a notamment pour objectif d'isoler une fraction protéique riche en albumines.

Lorsque la troisième étape est une centrifugation, l'homme du métier pourra utiliser tout équipement permettant de séparer en utilisant la force centrifuge tel qu'une centrifugeuse, un décanteur horizontal, une centrifugeuse à assiette ou une débourbeuse.

Lorsque la troisième étape est une microfiltration, celle-ci est préférentiellement une microfiltration tangentielle membranaire. Plus particulièrement, la microfiltration tangentielle est préférentiellement réalisée avec des membranes céramiques présentant une porosité de 0,01 $\mu$m à 1 $\mu$m, préférentiellement de 0,05 $\mu$m à 0,5 $\mu$m.

De manière facultative, cette étape de microfiltration ou centrifugation peut être précédée d'une étape de floculation des particules insolubles contenues dans la fraction soluble de plantes amidonnières, par toute technique connue par ailleurs de l'homme du métier.

La quatrième étape du procédé selon l'invention consiste en une étape d) d'ultrafiltration, effectuée sur le perméat de microfiltration ou sur le surnageant de centrifugation. Elle permet d'obtenir d'une part un rétentat d'ultrafiltration riche en albumines, et d'autre part un perméat d'ultrafiltration riche en sucres et en sels. De manière optionnelle, il est possible d'ajouter en amont de cette étape d'ultrafiltration, une étape optionnelle de concentration permettant de réduire la quantité d'eau et faciliter l'étape d'ultrafiltration. A cette fin, l'homme du métier pourra par exemple utiliser un évaporateur ou bien une osmose inverse.

Plus particulièrement, il est recommandé de réaliser l'ultrafiltration à l'aide de membranes présentant un seuil de coupure compris entre 5 et 20 kiloDaltons (KDa), de préférence 5 ou 10 KDa, la pression transmembranaire étant maintenue inférieure à 4 bars.

Le procédé selon la présente invention peut comprendre ensuite une cinquième étape optionnelle : il s'agit d'une osmose inverse réalisée sur le perméat d'ultrafiltration. La Demanderesse recommande d'effectuer cette osmose avec des membranes présentant un taux de rejection en chlorure de sodium compris entre 97 et 99,9 % de taux de réjection de chlorure de sodium.

La sixième étape consiste en la neutralisation du retentât de l'étape précédente par ajout d'une base sous agitation. Le etentât est ajusté à un pH compris entre 6 et 8.
De manière encore préférentielle, le pH du retentât est ajusté entre 6,5 et 7,5. De manière préférentielle, la base utilisée est choisie parmi la soude, la potasse ou l'ammoniaque. De manière encore préférentielle, la base utilisée est la soude. A noter que l'utilisation du carbonate est à éviter car il a une action néfaste sur le goût de la fraction albumine obtenue.

La septième étape consiste en un traitement thermique de type UHT du précédent retentât neutralisé. La température de traitement est comprise entre 130°c et 150°C, préférentiellement de 140°C. Le temps de traitement est compris entre 5 et 15 secondes, préférentiellement de 10 secondes.

La huitième étape est le séchage final du retentât par toute technique connue de l'homme de l'art. De manière préférentielle, on utilisera un atomiseur de type simple effet.

Le troisième et dernier objet de la présente invention consiste en l'utilisation de ladite albumine de pois afin d'émulsifier une grande quantité d'huile dans des applications alimentaires type colorant à café non laitier (anglais : non dairy « coffee-whitener »), notamment où les protéines d'origine laitières sont totalement remplacées, boissons UHT riches en protéines et lipides destinées à la nutrition clinique, notamment avec remplacement total ou partiel des protéines laitières, ou crèmes glacées, notamment avec remplacement total ou partiel des protéines laitières. L'albumine selon la présente invention permet également d'envisager des applications dans le domaine pharmaceutique et cosmétique.

Les exemples qui suivent permettent de mieux illustrer la Demande, sans toutefois en limiter la portée.

**EXEMPLES**

**Exemple 1**

Cet exemple illustre la production d'une albumine de pois selon l'art antérieur WO2014118449 que nous baptiserons PA.

La première étape est l'obtention de la fraction soluble du pois. De la farine de pois est initialement préparée par broyage de pois fourragers décortiqués sur broyeur à marteaux de type ALPINE équipé d'une grille de 100 pm. 300 kg de farine à 87% de matière sèche sont ensuite mis à tremper dans de l'eau à la concentration finale de 25% sur sec, à un pH de 6,5. 1044 kg de suspension de farine à 25% de matière sèche, soit donc 261 kg de farine sèche, sont alors introduits avec 500 kg d'eau dans une batterie d'hydrocyclones composée de 14 étages. Elle est alimentée par la suspension de farine à l'étage n° 5. Cette séparation conduit à l'obtention d'une phase légère qui correspond à la sortie de l'étage n° 1. Elle est constituée du mélange protéines, fibres internes et solubles.

Cette phase légère en sortie d'hydrocyclones renferme en mélange, 142 kg sur sec au total : les fibres, environ 14,8% en poids, soit 21 kg sec ; les protéines ; environ 42,8% en poids, soit 60,8 kg sec ; et les solubles, environ 42,4% en poids, soit 60,2 kg sec. Cette fraction présente une matière sèche de 11,4 %. On procède à la séparation des fibres sur décanteurs centrifuges de type WESTFALIA employés dans une unité industrielle féculière de traitement de la pomme de terre. La phase légère en sortie de décanteur centrifuge renferme un mélange de protéines et de solubles, tandis que la phase lourde renferme les fibres de pois. La phase lourde renferme 105 kg de fibres à 20 % de matière sèche. On constate que la quasi- totalité des fibres est bien retrouvée dans cette fraction.

Quant à la fraction protéines et solubles, elle renferme 1142 kg d'un mélange en solution de solubles et de protéines (fraction à 6 % de matière sèche). On procède à la floculation des protéines à leur point isoélectrique par ajustement de la phase légère en sortie de décanteur centrifuge à un pH de 4,5 et chauffage à 50 °C.

Les protéines ainsi mises à floculer sont laissées 10 minutes en cuve de maturation. Après précipitation des protéines, on procède à une décantation centrifuge, qui permet de récupérer, après séchage, du sédiment renfermant 56 kg de protéines type globulines (86 % de Nx6,25 sur sec) à 93 % de matière sèche et une fraction soluble contenant albumines, sucres et sels, titrant 2,5g pour 100g en M.S. dont 27% de protéines.

Puis, cette fraction soluble de pois est pompée au travers d'une unité de microfiltration équipée de membranes céramiques type Inside Ceram® ayant une porosité de 0.14 $\mu$m (19 canaux de 4.5 mm). Tout au long de la filtration la température est régulée à 60°C et la pression transmembranaire maintenue à une valeur comprise entre 0.4 et 0.6 bar. 707 litres de perméat de microfiltration, titrant 2,5g/100g de M.S., et 1768 litres de retentât de microfiltration, titrant 2,5 g/100G de M.S. sont ainsi récupérés.

550 litres du perméat de microfiltration sont pompés au travers d'une unité d'ultrafiltration. L'unité d'ultrafiltration est équipée de membranes céramiques type KERASEP® BX commercialisées par la société NOVASEP et ayant un seuil de coupure de 15 Kda (7 canaux de 6 mm). Tout au long de la filtration la température est régulée à 60°C et la pression transmembranaire maintenue à une valeur comprise entre 1 et 3 bars.

467 litres de perméat d'ultrafiltration, titrant 2,2 g/100g de M.S. et 33 litres de rétentat sont ainsi récupérés. Le rétentat d'ultrafiltration PA est atomisé sur une tour d'atomisation type spray-dryer simple effet. La consigne de température d'entrée est de 190°c et la température de sortie entre 85 et 90°C.

La composition de la fraction albumine finale (rétentat d'ultrafiltration PA atomisé) est donnée dans le tableau ci-dessous :

| Teneur en matière sèche | 93,9 | % |
|---|---|---|
| Teneur en protéine (Nx6.25) | 97 | g / 100 g de matière sèche |
| Teneur en cendres | 0,1 | g / 100 g de matière sèche |

**Exemple 2**

Cet exemple illustre la production d'une albumine de pois selon l'invention que nous baptiserons PA_INV.

Le procédé est similaire jusqu'à l'obtention de la fraction soluble de pois, suivant les étapes décrites dans le premier paragraphe de l'exemple 1.

La fraction soluble de pois ainsi obtenue est tout d'abord dégazée par un passage sur un skid SPX DEROX. Les paramètres de pilotage dudit skid SPX DEROX sont les suivants :

| Pression alimentation | bar | 0,88 |
|---|---|---|
| Pression sortie | bar | 2,73 |
| T°C alimentation | °C | 50,5 |
| T°C sortie | °C | 42,8 |
| T°C condenseur | °C | 37 |

(suite)

| Consigne vide | bar | 0,1 |
|---|---|---|
| Consigne niveau cuve | % | 60 |
| Débit soutirage vers NA7 | L/H | 750 |
| $O_2$ entrée dissous | mg/L | 9 |
| $O_2$ sortie dissous | mg/L | 0,1 |

On contrôle le bon dégazage par la mesure en entrée et en sortie de l'oxygène dissous.

Puis, cette fraction soluble de pois dégazée est pompée au travers d'une unité de microfiltration équipée de membranes céramiques type Inside Ceram® ayant une porosité de 0.14 $\mu$m (19 canaux de 4.5 mm). Tout au long de la filtration la température est régulée à 60°C et la pression transmembranaire maintenue à une valeur comprise entre 0.4 et 0.6 bar.

Le perméat est pompé au travers d'une unité d'ultrafiltration. L'unité d'ultrafiltration est équipée de membranes céramiques type KERASEP® BX commercialisées par la société NOVASEP et ayant un seuil de coupure de 15 Kda (7 canaux de 6 mm) Tout au long de la filtration la température est régulée à 60°C et la pression transmembranaire maintenue à une valeur comprise entre 1 et 3 bars.

On réalise la succession de 3 diafiltrations, consistant en la répétition par 3 fois d'un ajout d'un volume d'eau décarbonatée potabilisée à un volume de retentât suivi d'une ultrafiltration jusqu'à obtention d'une matière sèche du perméat inférieure à 0,5% de M.S.

Le rétentatd'ultrafiltration obtenu est alors rectifié sous agitation à pH 6,8 par ajout de soude concentrée à 50%.

Un traitement thermique UHT est ensuite appliqué au rétentat d'ultrafiltration neutralisé consistant en un passage sur un skid VOMATEC, à une température de 140°C pendant un temps de contact d'une dizaine de secondes puis flashé sous vide à environ 90°C.

La solution obtenue en sortie du traitement thermique UHT est enfin atomisée sur une tour d'atomisation type type spray-dryer simple effet. La consigne de température d'entrée est de 190°C et la température de sortie entre 85 et 90°C.

La poudre d'albumine de pois obtenue est baptisée PA_INV. La composition de celle-ci est donnée dans le tableau ci-dessous :

| Teneur en matière sèche | 94,4 | % |
|---|---|---|
| Teneur en protéine (Nx6.25) | 94 | g / 100 g de matière sèche |
| Teneur en cendres | 2,5 | g / 100 g de matière sèche |

**Exemple 3**

Cet exemple vise à décrire le protocole utilisé afin de mesurer l'activité émulsifiante (EA) des albumines de pois obtenues précédemment dans les exemples 1 (selon l'art antérieur) et 2 (selon l'invention) :

1. 0,2g de l'échantillon de produit est dispersée dans 20ml d'eau

2. La solution est homogénéisée avec un appareil Ultraturax IKA T25 pendant 30 sec à une vitesse de 9500 tours par minutes (rpm)

3. Ajout de 20ml d'huile de maïs commercialisée sous la dénomination AMPHORA par la Société CARGILL sous homogénéisation dans les mêmes conditions que l'étape 2 précédente.

4. Centrifugation 5 minutes à 3100g

    a. Si on obtient une bonne émulsion, c'est à dire. sans rupture ou inversion de phase de l'émulsion, on recommence le test à l'étape 1 en augmentant les quantités d'eau et d'huile de maïs de 50%.

    b. Si on obtient une mauvaise émulsion, par exemple un déphasage, une rupture ou inversion de phase de l'émulsion, on recommence le test à l'étape 1 en diminuant les quantités d'eau et d'huile de maïs de 50%.

La quantité maximale d'huile (Qmax en ml) pouvant être émulsifiée est ainsi déterminée de manière itérative.

L'activité émulsifiante est donc la quantité maximale d'huile de maïs pouvant être émulsifiée par grammes de produit.

$$\text{Activité émulsifiante} = (Qmax / 0,2)*100$$

**Exemple 4**

Cet exemple vise à présenter la comparaison des deux albumines de pois PA (Exemple 1, selon l'art antérieur) et PA_INV (Exemple 2, selon l'invention) ainsi que plusieurs albumines, végétales et laitières, et globulines commerciales de référence.

| | | Activité Emulsifiante (ml d'huile/g de produit) |
|---|---|---|
| Poudre de blanc d'oeuf | Albumines d'œuf | 1225 |
| WPC 392 | concentrat de protéine de lactosérum | 1301 |
| Skimmed Milk Powder | poudre de lait écrémée | 1185 |
| Sodium Caseinate supplier 1 | Caséinate de sodium | 782 |
| NUTRALYS S85F | Globulines de pois | 786 |
| NUTRALYS S85 PLUS | Globulines de pois | 195 |
| **PA** | **Albumines de pois selon l'art antérieur** | **564** |
| **PA_INV** | **Albumines de pois selon l'invention** | **1314** |

On voit bien qu'avec les albumines selon l'invention, on réussit à atteindre des valeurs d'activité émulsifiante qui sont supérieures de plus du double de celles des albumines de pois de l'art antérieur. Les valeurs permettent d'envisager des applications similaires à celles possibles avec les protéines animales telles que les albumines issues d'œuf ou de lait.

**Exemple 5 : Utilisation des albumines obtenues selon l'invention dans les applications alimentaires type colorant à café (anglais : coffee-whitener)**

Cet exemple illustre les possibilités d'applications alimentaires offertes par l'albumine de pois selon l'invention en présentant des résultats de production de « coffee-whitener » (substituts de lait pour café) visant le remplacement total des caséinates de sodium traditionnellement utilisés.

Les compositions des différents mélanges sont données dans le tableau ci-dessous, en pourcentage en poids brut de la composition finale. Afin de les préparer, on respecte la procédure suivante :

- Chauffage de l'huile de noix de coco à 80°c sous agitation et ajout du DIMODAN HP pour solubiliser les monoglycérides
- Chauffage de 90% de l'eau à 50°C et ajout des protéines sous agitation.
- Solubilisation des sels de phosphates dans les 10% d'eau restantes.
- Ajout de la solution des sels de phosphates et du sirop de glucose dans le récipient contenant la solution aqueuse de protéines
- Pré-émulsion de la solution DIMODAN HP/ huile avec un homogénéisateur 5 min à 10000 tr/min
- Mélange des deux solutions dans un homogénéisateur à 160 bars à 75°c jusqu'à obtention d'une solution émulsifiée.
- Pasteurisation 5s 80°C

Afin de quantifier la qualité d'émulsion, on mesure la taille des particules à l'aide d'un Particle Size Analyser 3000 de la société MALVERN. Le Dmode représente la taille moyenne des particules émulsifiées.

| | Contrôle 1 (caseinate) | Contrôle 2 (Globuline d epois) | Contrôle 3 (Albumine de pois PA) | Albumine de pois selon l'invention (PA_INV) |
|---|---|---|---|---|
| Glucose syrup 3072 (Roquette) | 45,85 | 45,85 | 45,85 | 45,85 |
| Huile de noix de cooc hydrogénée | 23,36 | 23,36 | 23,36 | 23,36 |
| Caseinate de sodium EM7 (DMV) | 1,75 | - | - | - |
| Globulines de pois (NUTRALYS S85F) | - | 1,75 | - | - |
| Albumines de pois PA | - | - | 1,75 | - |
| Albumines de pois PA_INV | - | - | - | 1,75 |
| Hydrogenophosphate de dipotassium E340 (Merck) | 1,46 | 1,46 | 1,46 | 1,46 |
| Domodan HP | 0,58 | 0,58 | 0,58 | 0,58 |
| Eau | 27 | 27 | 27 | 27 |
| D10 (microns) | 0,256 | 3,83 | 108 | 0,362 |
| D50 (microns) | 0,535 | 8,15 | 2,76 | 1,26 |
| D90 (microns) | 1,16 | 17,7 | 5,14 | 5,02 |
| Dmode (microns) | 0,526 | 8,15 | 2,78 | 0,586 |
| D4,3 (microns) | 0,964 | 11 | 0,586 | 2,1 |

On voit clairement que seule l'albumine de pois selon l'invention PA_INV permet l'obtention de particules émulsifiées d'une taille moyenne inférieures au micron.

**Exemple 6 : Utilisation des albumines obtenues selon l'invention dans les applications alimentaires type Boissons prête à boire UHT, pour la nutrition dietetique, sportive ou clinique, (Ready To Drink ou RTD)**

Cet exemple illustre les possibilités d'applications alimentaires offertes par l'albumine de pois selon l'invention en présentant des résultats de production de boissons type « prête ou boire » ou « Ready To Drink » UHT, pour la nutrition mainstream, dietetique, sportive ou clinique visant le remplacement partiel (environ 50%) des caséinates de sodium traditionnellement utilisés. L'exemple présente des compositions titrant environ 10% en poids de protéines, mais l'albumine de pois selon l'invention convient également à des compositions dont la teneur en protéines varie entre 5 et 15% en poids, voire 20% en poids. De même, des teneurs en huile supérieures sont possibles, il suffira à l'homme du métier d'adapter la recette avec l'albumine de pois selon l'invention. Au vu des propriétés émulsifiantes des albumines selon l'invention, un remplacement total des protéines laitières est également envisageable.

Les compositions des différents mélanges sont données dans le tableau ci-dessous, en pourcentage massique de la composition finale. Afin de les préparer, on respecte la procédure suivante :

- Mélange à sec des produits en poudre (protéines, maltodextrines et saccharose),
- Chauffage de l'eau à 50°C, ajout du mix poudre préalablement préparé, dispersion avec un agitateur haut-cisaillement type Silverson pendant 30 min, à 50°C, sous 3500 RPM, ajout de l'arôme vanille,
- Placer la lécithine et l'huile dans un récipient séparé; agiter et chauffer à 50°C,
- Aprés 30min d'hydratation, ajouter cette solution lecithine/huile au premier mélange (protéines, maltodextrines et saccharose) en utilisant un agitateur haut-cisaillement pendant 5 minutes (10000 rpm),
- Homogénéisation à 200bars et 75°C en deux étapes (30% sur la seconde étape)
- Réalisation d'un traitement UHT à 142°C pendant 5s
- Réfroidir et stocker à 4°C.

Afin de quantifier la qualité d'émulsion, on mesure la taille des particules à l'aide d'un Particle Size Analyser 3000 de la société MALVERN. Le Dmode représente la taille moyenne des particules émulsifiées.

| | | | Contrôle 1 (Caséinate) | Contrôle 2 (globuline pois) | Contrôle 3 (Albumine pois PA) | Albumine de pois selon l'invention (PA_INV) |
|---|---|---|---|---|---|---|
| Ingrédients | Eau | | 60 | | | |
| | Maltodextrine | GLUCIDEX® IT19 (ROQUETTE) | 18,74 | 18,34 | 18,81 | 18,81 |
| | Huile de colza | | 3,78 | | | |
| | Saccharose | | 3,4 | | | |
| | Huile de tournesol | | 5,52 | | | |
| | Lécithine de soja | | 0,4 | | | |
| | Arome vanille | | 0,36 | | | |
| | Caséine laitière | MPI - Prodiet 85b | 10,8 | 5,53 | 5,53 | 5,53 |
| | Globuline de pois | NUTRALYS® S85F | 0 | 5,67 | 0 | 0 |
| | Albumine de pois de l'art antérieur | PA | 0 | 0 | 5,2 | 5,2 |
| | Albumine de pois selon l'invention | PA_INV | 0 | 0 | 0 | 0 |
| Analyse Granulométrique | Dx 10 (micron) | | 0,186 | 0,565 | 3,61 | 0,203 |
| | Dx 50 | | 0,546 | 43,1 | 9,34 | 0,482 |
| | Dx 90 | | 1,66 | 105 | 103 | 6,2 |
| | D mode | | 0,577 | 69,1 | 6,19 | 0,444 |
| | D 4,3 | | 3,48 | 47,9 | 35,1 | 3,08 |

On voit clairement que seul l'albumine de pois selon l'invention PA_INV permet d'obtenir un Dmode aussi bon (inférieur à 1 micron) que la référence obtenue avec les caséines d'origine laitières.

**Exemple 7 : Utilisation des albumines obtenues selon l'invention dans les applications alimentaires type « pea milk » ou « lait végétal », destiné à la consommation quotidienne**

Cet exemple illustre les possibilités d'applications alimentaires offertes par l'albumine de pois selon l'invention en présentant des résultats de production de boissons type « pea milk » ou « lait végétal » destiné à une consommation quotidienne.

Les compositions des différents mélanges sont données dans le tableau ci-dessous. Afin de les préparer, on respecte la procédure suivante :

- Mélange de l'eau et de la gomme géllane dans de l'eau à 90°C jusqu'à dissolution complète, en agitant si nécessaire.
- Refroidissement à 70°C.
- Ajout des autres constituants, à l'exception de l'huile, de la lécithine de tournesol et de l'arôme vanille jusqu'à dissolution complète, en agitant si nécessaire.
- Chauffage de l'huile de tournesol et ajout de la lécithine.
- Ajout du mélange huile/lécithine et de l'arôme vanille sous agitation avec un mixer haut-cisaillement
- Homogénéisation de la solution à 75°C en utilisant un homogénéisateur haute-pression à 270 bars (1ère étape) et 30 bars (2eme étape).
- Stérilisation par traitement UHT à 142°C pendant 5sec
- Conditionnement et stockage à 4°C.

Afin de quantifier la qualité d'émulsion, on mesure la taille des particules à l'aide d'un Particle Size Analyser 3000 de la société MALVERN. Le Dmode représente la taille moyenne des particules émulsifiées.

| | | | Contrôle 1 (Globulines de pois) | Contrôle 2 (Albumine de pois PA) | Albumine de pois selon l'invention (PA_INV) |
|---|---|---|---|---|---|
| Ingrédients | Eau | | 87,77 | 87,1 | 87,84 |
| | Saccharose | | 6,3 | 6,3 | 6,3 |
| | Huile de tournesol | | 1,6 | 1,6 | 1,6 |
| | Tricalcium phosphate | | 0,29 | 0,29 | 0,29 |
| | Gomme de gellane | KELCOGEL HS-B gellan gum | 0,1 | 0,1 | 0,1 |
| | Lécithine de tournesol | UNILEC SFL-IP non GMO | 0,1 | 0,1 | 0,1 |
| | Dipotassium hydrogen phosphate | | 0,08 | 0,08 | 0,08 |
| | Cocktail de vitamines | Barentz DB2B12 Premix 9309 | 0,02 | 0,02 | 0,02 |
| | Globuline de pois | NUTRALYS® S85F | 3,75 | 0 | 0 |
| | Albumine de pois selon l'art antérieur | PA | 0 | 4,42 | 0 |
| | Albumine d epois selon l'invention | PA_INV | 0 | 0 | 3,68 |
| Analyse granulométrique | D10 (en microns) | | 0,24 | 2,83 | 0,24 |
| | D50 (en microns) | | 0,61 | 5,58 | 0,59 |
| | D90 (en microns) | | 10,5 | 10,7 | 4,34 |
| | **D mode (en microns)** | | **0,43** | **5,85** | **0,44** |
| | D 4,3 (en microns) | | 3,37 | 6,23 | 2,11 |

On voit clairement que seul l'albumine de pois selon l'invention PA_INV permet d'obtenir un Dmode aussi bon (inférieur à 1 micron) que la référence obtenue avec la globuline de pois. L'albumine de pois de l'art antérieur ne permet pas d'obtenir un Dmode des globules émulsionnés inférieur à 1 micron, et similaire à la référence des globulines : seule l'albumine de pois selon la présente invention le permet.

## Revendications

1. Albumine de pois **caractérisée en ce que** son activité émulsifiante est supérieure à 600 ml d'huile de maïs par gramme d'albumine, l'activité émulsifiante étant déterminée selon la méthode de mesure décrite dans la description.

2. Albumine de pois selon la revendication 1 dont l'activité émulsifiante est supérieure à 800 ml d'huile de maïs par gramme d'albumine, l'activité émulsifiante étant déterminée selon la méthode de mesure décrite dans la description.

3. Albumine de pois selon la revendication 2 dont l'activité émulsifiante est supérieure à 1000 ml d'huile de maïs par gramme d'albumine, l'activité émulsifiante étant déterminée selon la méthode de mesure décrite dans la description.

4. Procédé de traitement d'une fraction soluble de pois permettant l'obtention d'une albumine de pois selon une quelconque des revendications précédentes comprenant :

   a. La fourniture d'une fraction soluble de pois
   b. Suivie d'une étape de dégazage sous vide de la fraction soluble de pois
   c. Suivie d'une étape de microfiltration ou de centrifugation de la fraction soluble dégazée conduisant à un perméat de microfiltration ou à un surnageant de centrifugation,
   d. Suivie d'une étape d'ultrafiltration du perméat de microfiltration ou du surnageant de centrifugation, conduisant à un retentât d'ultrafiltration,
   e. Suivie d'une étape éventuelle d'osmose inverse du perméat d'ultrafiltration conduisant à un perméat et à un retentât issus de l'osmose inverse.
   f. Suivie d'une neutralisation du pH des retentâts obtenus lors des étapes d) ou e) à un pH compris entre 6,5 et 7,5,
   g. Suivie d'un traitement thermique de type UHT, à une température comprise entre 130°c et 150°C, préférentiellement de 140°C, pendant un temps de traitement compris entre 5 et 15 secondes, préférentiellement autour de 10 secondes, du retentât neutralisé de l'étape f)
   h. Suivie d'un séchage du retentât traité thermiquement de l'étape g)

5. Procédé selon la revendication 4 **caractérisé en ce que** l'étape f) est réalisée par ajout d'une base choisie parmi la soude, la potasse ou l'ammoniaque, préférentiellement la soude.

6. Procédé selon une quelconque des revendications précédentes **caractérisé en ce que** le séchage de l'étape h) est effectué par une atomisation simple effet.

7. Utilisation d'albumine de pois selon l'une quelconque des revendications 1 à 3 pour réaliser des formulations alimentaires

8. Utilisation d'albumine de pois selon la revendication 7 pour réaliser un colorant à café, aussi appelé coffee whitener.

9. Utilisation d'albumine de pois selon la revendication 7 pour réaliser une boisson « type prête à boire ».

10. Utilisation d'albumine de pois selon l'une quelconque des revendications 1 à 3 pour réaliser des formulations cosmétiques ou pharmaceutiques.

## Patentansprüche

1. Erbsenalbumin, **dadurch gekennzeichnet, dass** seine Emulgieraktivität größer als 600 ml Maisöl pro Gramm Albumin ist, wobei die Emulgieraktivität nach dem in der Beschreibung beschriebenen Messverfahren bestimmt wird.

2. Erbsenalbumin nach Anspruch 1, wobei die Emulgieraktivität größer als 800 ml Maisöl pro Gramm Albumin ist, wobei die Emulgieraktivität nach dem in der Beschreibung beschriebenen Messverfahren bestimmt wird.

3. Erbsenalbumin nach Anspruch 2, wobei die Emulgieraktivität größer als 1000 ml Maisöl pro Gramm Albumin ist, wobei die Emulgieraktivität nach dem in der Beschreibung beschriebenen Messverfahren bestimmt wird.

4. Verfahren zur Behandlung einer löslichen Erbsenfraktion, mit der ein Erbsenalbumin nach einem der vorstehenden Ansprüche erhalten werden kann, umfassend:

> a. Die Bereitstellung einer löslichen Erbsenfraktion
> b. Gefolgt von einem Schritt der Vakuumentgasung der löslichen Erbsenfraktion
> c. Gefolgt von einem Schritt der Mikrofiltration oder Zentrifugation der entgasten löslichen Fraktion, der zu einem Mikrofiltrationspermeat oder einem Zentrifugationsüberstand führt,
> d. Gefolgt von einem Schritt der Ultrafiltration des Mikrofiltrationspermeats oder des Zentrifugationsüberstands, was zu einem Ultrafiltrationsretentat führt,
> e. Gefolgt von einem optionalen Schritt der Umkehrosmose des Ultrafiltrationspermeats, der zu einem Permeat und einem Retentat aus der Umkehrosmose führt.
> f. Gefolgt von einer Neutralisation des pH-Werts der in den Schritten d) oder e) erhaltenen Retentate auf einen pH-Wert zwischen 6,5 und 7,5,
> g. Gefolgt von einer Wärmebehandlung vom UHT-Typ bei einer Temperatur zwischen 130 °C und 150 °C, vorzugsweise von 140 °C, während einer Behandlungszeit zwischen 5 und 15 Sekunden, vorzugsweise von etwa 10 Sekunden, des neutralisierten Retentats aus Schritt f)
> h. Gefolgt von einer Trocknung des wärmebehandelten Retentats aus Schritt g)

5. Verfahren nach Anspruch 4, **dadurch gekennzeichnet, dass** Schritt f) durch Zugabe einer Base durchgeführt wird, die aus Natronlauge, Kalilauge oder Ammoniak ausgewählt ist, vorzugsweise Natronlauge.

6. Verfahren nach einem der vorstehenden Ansprüche,
**dadurch gekennzeichnet, dass** die Trocknung des Schritts h) durch eine Einfach-Zerstäubung durchgeführt wird.

7. Verwendung von Erbsenalbumin nach einem der Ansprüche 1 bis 3 zur Herstellung von Lebensmittelformulierungen.

8. Verwendung von Erbsenalbumin nach Anspruch 7 zur Herstellung eines Kaffeeweißers, auch Coffee Whitener genannt.

9. Verwendung von Erbsenalbumin nach Anspruch 7 zur Herstellung eines Getränks vom Typ "trinkfertig".

10. Verwendung von Erbsenalbumin nach einem der Ansprüche 1 bis 3 zur Herstellung kosmetischer oder pharmazeutischer Formulierungen.

**Claims**

1. Pea albumin **characterized in that** its emulsifying activity is greater than 600 ml of corn oil per gram of albumin, the emulsifying activity being determined according to the measurement method described in the description.

2. The pea albumin according to claim 1, of which the emulsifying activity is greater than 800 ml of corn oil per gram of albumin, the emulsifying activity being determined according to the measurement method described in the description.

3. The pea albumin according to claim 2, of which the emulsifying activity is greater than 1000 ml of corn oil per gram of albumin, the emulsifying activity being determined according to the measurement method described in the description.

4. A method for processing a pea soluble fraction making it possible to obtain a pea albumin according to any of the preceding claims, comprising:

> a. Providing a pea soluble fraction
> b. Followed by a step of vacuum degassing the pea soluble fraction
> c. Followed by a step of microfiltration or centrifugation of the degassed soluble fraction leading to a microfiltration permeate or to a centrifugation supernatant,

d. Followed by a step of ultrafiltration of the microfiltration permeate or of the centrifugation supernatant, leading to an ultrafiltration retentate,

e. Followed by an optional step of reverse osmosis of the ultrafiltration permeate leading to a permeate and to a retentate from the reverse osmosis.

f. Followed by pH neutralization of the retentates obtained in steps d) or e) to a pH of between 6.5 and 7.5,

g. Followed by UHT-type heat treatment, at a temperature of between 130°C and 150°C, preferably 140°C, for a treatment time of between 5 and 15 seconds, preferably around 10 seconds, of the neutralized retentate from step f)

h. Followed by drying of the heat-treated retentate from step g)

5. The method according to claim 4, **characterized in that** step f) is carried out by adding a base selected from soda, potash or ammonia, preferentially soda.

6. The method according to any of the preceding claims, **characterized in that** the drying in step h) is carried out by single-action atomization.

7. Use of pea albumin according to any of claims 1 to 3 for producing food formulations

8. The use of pea albumin according to claim 7 to produce a coffee whitener.

9. The use of pea albumin according to claim 7 to produce a ready-to-drink beverage.

10. The use of pea albumin according to any of claims 1 to 3 to produce cosmetic or pharmaceutical formulations.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006052003 A
- WO 2014118449 A
- EP 1400537 A

**Littérature non-brevet citée dans la description**

- **LEI (LEIGH) GAO**. Pilot scale recovery of proteins from a pea whey discharge by ultrafiltration. *Lebensm.-Wiss. u.-Technol.*, 2001, vol. 34, 149-158
- **LU**. Foaming and emulsifying properties of pea albumin fractions and partial characterisation of surface-active components. *J.Sci.Food.Agric*, 2000, vol. 80, 1964-1972